# EUROPEAN PATENT APPLICATION

(11) **EP 2 037 638 A1**
(43) Date of publication of application: **18.03.2009**
(21) Application number: 07871768.3
(22) Date of filing: 12.12.2007
(51) Int. Cl.: H04L 12/56

(54) **A METHOD, EQUIPMENT AND SYSTEM FOR PATH SELECTION AND FLOW CONTROL**

(30) Priority: 13.12.2006 CN 200610165838
(71) Applicant: Huawei Technologies Co., Ltd., Longgang District, Shenzhen Guangdong 518129 (CN)
(72) Inventor: CHEN, Taizhou, Shenzhen Guangdong 518129 (CN); TIAN, Wengang, Shenzhen Guangdong 518129 (CN)
(74) Representative: Karlsson, Leif Karl Gunnar
(86) International application number: PCT/CN2007/071220
(87) International publication number: WO 2008/086720

(57) **Abstract**

A method, equipment and system for path selection and flow control are in the network communication field. In order to solve the problem that the QoS may be misjudged and the call completing rate may be affected when the path selection and flow control are preformed in the prior art, the invention provides a method for path selection and flow control. The method includes: a station gateway pair which is allowed to create the call is selected from the preset station gateway pairs and a call is created; the preset station gateway pairs include the station gateway pair which is preset according to the station direction from the local station gateway controller to the opposite station media gateway controller; after the call is created, it is decided that if the call flow of the station gateway pair will be controlled according to the reported QoS information of the station gateway pair. The invention also provides an equipment and system for path selection and flow control. By using the invention, the QoS is sampled based on the station gateway, and the path selection and flow control are performed according to the QoS sampling information. Therefore, the quality of service is ensured and the call completing rate of the system could be improved.

## Description

This application claims the benefit of Chinese Application No. 200610165838.1 filed on December13 2006, titled "METHOD, DEVICE AND SYSTEM FOR ROUTING AND FLOW CONTROL", which is incorporated herein by reference in its entirety.

### Field of the Invention

The present invention relates to the field of network communications, and in particular, to a method, device and system for routing and flow control.

### Background of the Invention

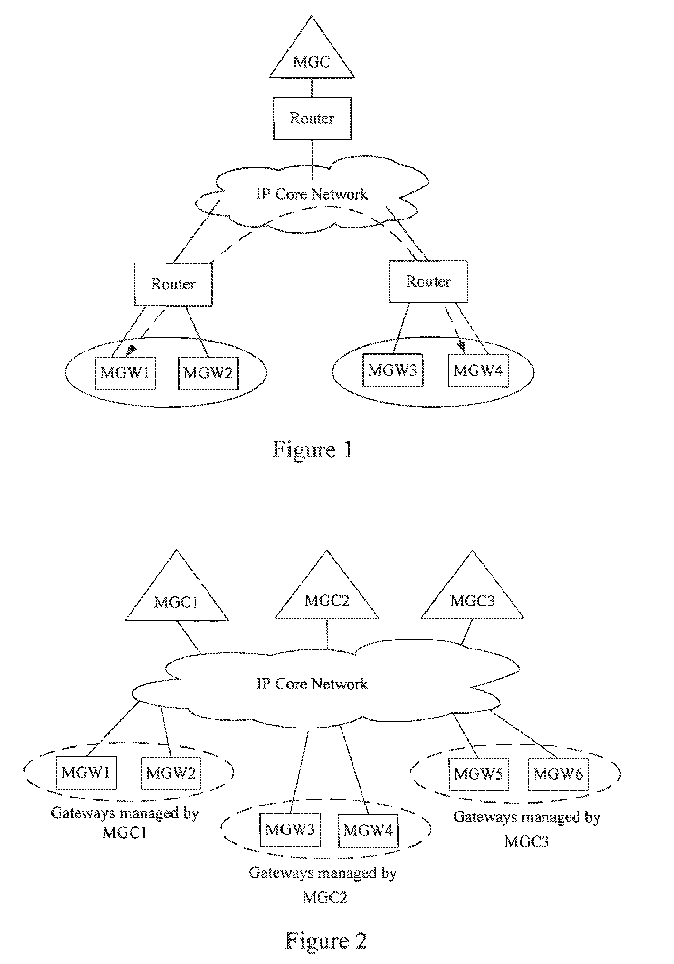

As the core technology of Next Generation Network (NGN), soft switching provides a call control and connection control function to NGN so as to satisfy services with real-time requirements. In the soft switching architecture, the core network implements the separation of bearing and controlling, and implements a call state management and control on media gateway bearer resources via a Media Gateway Controller (MGC), thereby accomplishing a call control function; while the Media Gateway (MGW) is used for implementing a bearer and accomplishing establishment, modification and release of a media stream, and a resource management, etc. At present, the core network of traditional telecommunication networks, including Public Switched Telephone Network (PSTN) and Public Land Mobile Network (PLMN), is evolving to the soft switching architecture gradually. Figure 1 is a schematic networking diagram of an Internet Protocol (IP) bearer network in the soft switching architecture. Usually, the MGC is disposed in a central city, while the MGW is disposed in relative more cities. Through an IP core network, the MGC controls the MGW to establish a bearer, so that the communication may be implemented between users of different areas, and voice streams are delivered via the IP core network,

In the traditional telecommunication network, a voice call is usually carried in Time Division Multiplex (TDM) and Asynchronous Transfer Mode (ATM); but in the soft switching architecture, the concept of IP bearer type, i.e., a physical entity type for bearing an IP packet, is introduced. For the TDM, a fixed bandwidth is allocated to each call; and for the ATM, a certain Quality of Service (QoS) is guaranteed with a reserved bandwidth. However, for the IP bearer, a "Best-Effort" policy is employed and no bandwidth is reserved, thus no QoS is guaranteed and there exists an inherent problem of delay, packet loss and jitter. When the quality of bearer is poor, the QoS of the voice call is also degraded. Therefore, in the soft switching architecture, when the voice call bearer path includes the IP bearer, the quality of bearer needs to be monitored. When the quality of the bearer becomes poor, the routing needs to be reselected or the call amount needs to be decreased so as to guarantee the QoS.

In a large-scale networking, a plurality of MGCs exists. Each MGC manages a number of MGWs. As shown in Figure 2, there are 3 MGCs in the networking, and each MGC manages two MGWs. It is assumed that the user of MGC1 calls the user of MGC2, thus the site MGC1 is referred to as a local office, and the site MGC2 is referred to as a peer office. In the case of the IP bearer, in order to guarantee the quality of conversation, the local office needs to perform an outgoing routing according to the QoS of the IP bearer network, and the outgoing routing is usually performed in the order of Office Direction-Routing-IP Trunk Group-MGW. Usually, office direction information is configured on the local office. During the calling, the office direction in which the called user exists may be determined by analyzing the called number. In an office direction, a plurality of IP trunk groups (IP bearer path collection) may be configured, in other words, there is a plurality of connection paths between two sites. The local office obtains routing information of an office direction according to the office direction, and then selects an IP trunk group and an MGW corresponding to the IP trunk group according to the routing information, for example, selects MGW2 as outgoing.

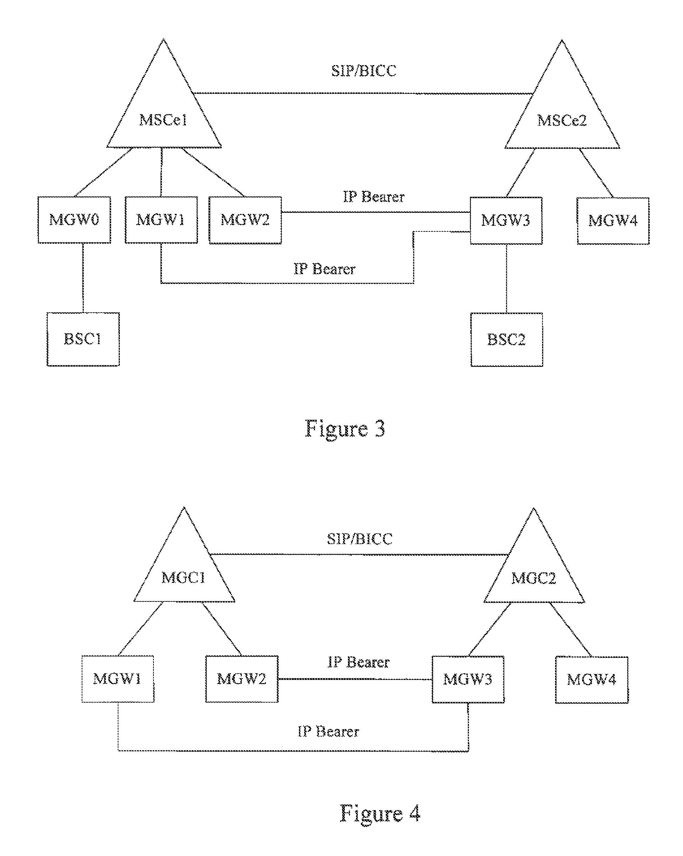

Figure 3 is a schematic diagram of the process for the routing and flow control according to the QoS of the IP bearer in Code Division Multiple Addressing (CDMA) 2000 in the prior art. Mobile Switching Center (MSCe) performs the routing according to the QoS information and determines whether to control the traffic (the call amount), i.e., whether to perform the flow control. When the QoS becomes poor, the MSCe starts the flow control and decreases call amount gradually; and when the QoS is recovered, the MSCe increases call amount gradually, till the flow control is no longer performed. When a user under Base Station Controller (BSC) 1 calls a user under BSC2, the process in which MSCe1 performs the routing and flow control according to the Cos is described as follows:

1 : When the user under BSC1 initiates a call, MSCe1 selects MGW2 as outgoing (or MGW1 as outgoing) in the order of Office Direction-Routing-IP Trunk Group-MGW, requests MGW2 to establish a bearer via an H.248 message carrying QoS sampling information, in other words, requests to detect the QoS of the call, and then, requests the peer office MSCe2 to establish the call via Session Initiated Protocol (SIP) or Bearer Independent Call Control (BICC) protocol.

2: When the call is started, MGW2 determines the current QoS according to the delay, packet loss and jitter of the IP stream of the call. If the QoS becomes poor, MGW2 reports to MSCe1 via a 39/xx interface and an H,248 message that the QoS becomes poor. After the MSCe1 receives the event, the MSCe1 updates the QoS information of the corresponding trunk group in the QoS information table. If the current QoS cannot meet the call quality requirement, the flow control is started on the trunk group and call amount is decreased gradually.

3: When the QoS of the IP stream of the call is recovered, MGW2 reports the QoS recovery information to MSCe1 via a 39/xx interface and an H.248 message. After MSCe1 receives the recovery information, MSCe1 stops the flow control and releases the control on call amount of the trunk group gradually.

The above prior art has the following disadvantages.

The routing and flow control according to QoS is based on IP trunk group. In a large-scale networking, a plurality of MGWs may be configured in an IP trunk group, and when one MGW reports a message indicating that the QoS becomes poor, the flow control may be caused on the IP trunk group while the QoS of other MGWs in the trunk group may be normal. For example, when MGW2 reports the message indicating that the QoS becomes poor to MSCe1, MSCe1 performs the flow control on the corresponding IP trunk group. If the IP trunk group is further associated with MGW1, the flow control is also performed on MGW1 even the QoS on MGW1 is normal. Therefore, misjudgment is made on the QoS, the flow control is performed on other MGWs associated with the IP trunk group with normal QoS, and the call success ratio of the system is affected.

### Summary of the Invention

To solve the problem in the prior art that the misjudgment is made on the QoS and the call success ratio of the system is affected during the routing and flow control, an embodiment of the present invention provides a method for routing and flow control, including:
selecting an office direction gateway pair which is allowed to establish a call from preconfigured office direction gateway pairs to establish a call, the preconfigured office direction gateway pairs including an office direction gateway pair preconfigured according to an office direction from a local office MGC to a peer office MGC; and
after the call is established, determining whether to perform a flow control on a call amount of the office direction gateway pair according to reported QoS information of the office direction gateway pair.

An embodiment of the present invention further provides a device for routing and flow control, including:
a call establishment module, adapted to select an office direction gateway pair which is allowed to establish a call from configured office direction gateway pairs to establish a call; and
a flow control module, adapted to determine whether to perform a flow control on a call amount of the office direction gateway pair according to reported QoS information of the office direction gateway pair after the call establishment module establishes the call.

An embodiment of the present invention further provides a system for routing and flow control, including: a local office MGC and a peer office MGC, wherein:
the local office MGC is adapted to select an office direction gateway pair which is allowed to establish a call from preconfigured office direction gateway pairs to establish a call, and determine whether to perform a flow control on a call amount of the office direction gateway pair according to reported QoS information after the call is established; and
the peer office MGC is adapted to establish the call after receiving a call establishment request from the local office MGC.

An embodiment of the present invention further provides a method for routing and flow control, including:
selecting an IP trunk group gateway pair from preconfigured IP trunk group gateway pairs to establish a call, the IP trunk group gateway pair including an IP trunk group gateway pair preconfigured according to an office direction from a local office MGC to a peer office MGC; and
determining whether to perform a flow control on a call amount of an IP trunk group in the IP trunk group gateway pair according to reported QoS information of the office direction gateway pair after the call is established.

An embodiment of the present invention further provides a device for routing and flow control, including:
a call establishment module, adapted to select an IP trunk group gateway pair from configured IP trunk group gateway pairs to establish a call;
a flow control module, adapted to determine whether to perform a flow control on a call amount of an IP trunk group in the IP trunk group gateway pair according to reported QoS information after the call establishment module establishes the call.

An embodiment of the present invention further provides a system for routing and flow control, including: a local office MGC and a peer office MGC, wherein:
the local office MGC is adapted to select an IP trunk group gateway pair from configured IP trunk group gateway pairs to establish a call, and determine whether to perform a flow control on a call amount of an IP trunk group in the IP trunk group gateway pair according to reported QoS information of the office direction gateway pair after a call establishment module establishes the call; and
the peer office MGC is adapted to establish the call after receiving a call establishment request from the local office MGC.

Embodiments of the present invention have the following beneficial effects.

The routing and QoS sampling are performed based on an office direction gateway pair or IP trunk group gateway pair, and the flow control is performed on call amount of the office direction gateway pair or IP trunk group gateway pair according to QoS sampling information, thus, the QoS is guaranteed and the precision of the flow control is improved. Moreover, the flow control is further refined and it is advantageous to improve the call success ratio of the system.

### Brief Description of the Drawings

Figure 1 is a schematic diagram of an IP bearer networking in a soft switching architecture in the prior art;

Figure 2 is a schematic diagram of an inter-office call in the soft switching architecture in the prior art;

Figure 3 is a schematic diagram of the IP bearer networking in CDMA2000 in the

### prior art;

Figure 4 is a schematic diagram of the IP bearer networking based on an office direction gateway pair according to an embodiment of the invention;

Figure 5 is a flow chart of the method for the routing and flow control according to an embodiment of the invention;

Figure 6 is a structural diagram of the device for the routing and flow control according to an embodiment of the invention; and

Figure 7 is a structural diagram of the system for the routing and flow control according to an embodiment of the invention.
Detailed Description of the Embodiments

The present invention is now further illustrated in conjunction with the drawings and embodiments, but the invention is not limited to the following embodiments.

In the embodiments of the invention, an office direction and a gateway which are associated with each other are defined as an office direction gateway pair. An office direction may be associated with a plurality of MGWs and an MGW may also be associated with a plurality of office directions. In the embodiments of the invention, the associated IP trunk group and gateway may also be defined as an IP trunk group gateway pair. An IP trunk group may be associated with a plurality of MGWs and an MGW may also be associated with a plurality of IP trunk groups. In the embodiments of the present invention, a corresponding MGW is selected as an outgoing MGW and is performed with the QoS sampling based on the office direction gateway pair or the IP trunk group gateway pair; and it is determined whether to perform the flow control on call amount of the office direction gateway pair or the IP trunk group gateway pair according to QoS sampling information, and the call amount is decreased gradually when the QoS becomes poor and the control on call amount is released gradually after the QoS is recovered.

An embodiment of the present invention may be applied to a telecommunication network based on the soft switching architecture, including an NGN network, CDMA2000, a core network circuit domain of Universal Mobile Telecommunication System (UMTS) and so on.

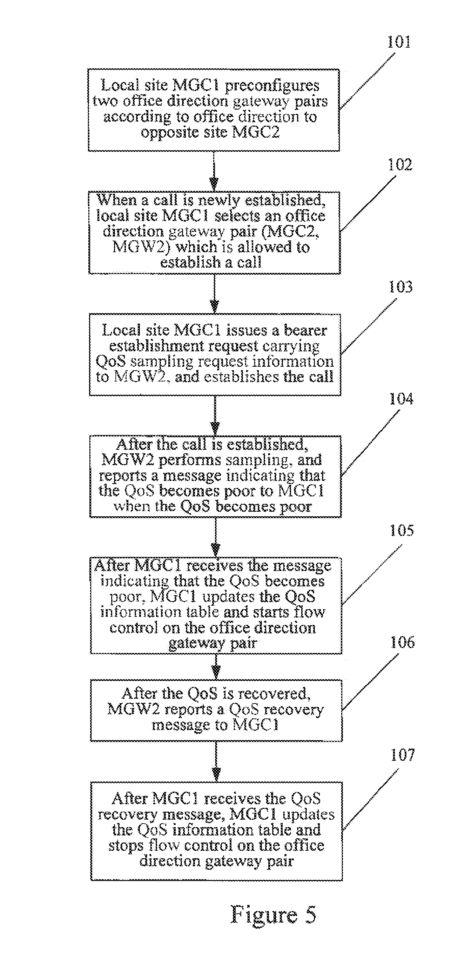

As shown in Figure 4, the networking has two sites: MGC1 and MGC2. An office direction directed to MGC2 is configured on MGC1, and gateways associated with the office direction include MGW1 and MGW2, in other words, there are two office direction gateway pairs associated with the office direction directed to MGC2: (MGC2, MGW1) and (MGC2, MGW2). In this embodiment, it is assumed that a user under MGC1 calls a user under MGC2. As shown in Figure 5, an embodiment of the present invention provides a method for routing and flow control including the following steps.

Block 101: First of all, the information of two office direction gateway pairs of the office direction directed to MGC2 is configured and saved on MGC1. In other words, two records are added to the QoS information table on MGC1, and two office direction gateway pairs i.e. (MGC2, MGW1) and (MGC2, MGW2) are recorded.

Block 102: During establishing a new call, for example, when a user under local office MGC1 initiates a call to a user under peer office MGC2, MGC1 selects an office direction gateway pair (MGC2, MGC2) which allows to establish the call from two office direction gateway pairs preconfigured in the QoS information table according to the office direction directed to MGC2, in other words, MGC1 selects MGW2 as outgoing.

Allowing establishing the call means that the sum of newly added call amount and existing call amount on the selected office direction gateway pair does not reach or exceed a preset threshold. For example, if the actual call amount before the flow control is 100, a threshold for the flow control is set according to a certain percentage such as 95%, thus, the threshold is 100*95%=95, in other words, the actual call amount after the flow control cannot exceed 95. If a call needs to be newly established and the current call amount after the flow control is 90, the sum of the call amount to be established and the current call amount is 90+1=91, which does not exceed the threshold 95. Therefore, this office direction gateway pair may be selected to establish the call.

Block 103: MGC1 issues a bearer establishment request carrying QoS sampling request information for requesting to sample the QoS of the call to MGW2, and requests the peer office MGC2 to establish the call via a call control signaling (such as SIP and BICC).

Block 104: After the call is established, MGW2 determines the current QoS according to the delay, packet loss and jitter of the IP stream of the current call; if the current QoS becomes poor and cannot meet the call quality requirement, MGW2 reports a QoS message to MGC1.

Block 105: After the MGC1 receives the information indicating that the QoS becomes poor reported by MGW2, MGC1 updates the QoS information of the office direction gateway pair where MGW2 exists in the QoS information table saved on MGC1, Because the current QoS is poor, MGC1 starts the flow control on the office direction gateway pair and limits the call amount of the office direction gateway pair, in other words, decreases the call amount gradually. When flow control is started, an alarm may be reported to an alarm device for indicating that the office direction gateway pair is in a flow control state. After flow control is started, a minimum value may be preset and when the call amount after the flow control reaches the minimum value, the flow control is stopped.

Block 106: After the QoS of the IP stream of the call is recovered, MGW2 reports QoS recovery information to MGC1.

Block 107: After MGC1 receives the QoS recovery information reported by MGW2, MGC1 searches a record of the office direction gateway pair pre-stored in the QoS information table, updates the QoS information of the office direction gateway pair in this record, stops the flow control, and releases the control on call amount of the office direction gateway pair gradually. After the flow control is stopped, an alarm recovery message may be reported to the alarm device for indicating that the flow control is stopped on the office direction gateway pair.

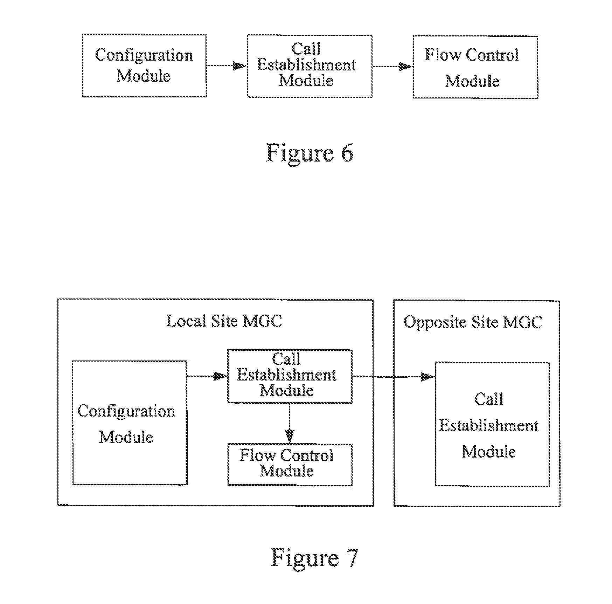

Referring to Figure 4 and Figure 6, an embodiment of the present invention further provides a device for routing and flow control, including a configuration module, a call establishment module, and a flow control module.

1) The configuration module is adapted to pre-configure an office direction gateway pair by the local office MGC according to the office direction to the peer office MGC.

For example, the information of two office direction gateway pairs linked to the peer office MGC2 is configured and saved on the local office MGC1; in other words, two records are added to the QoS information table on MGC1 so as to record two office direction gateway pairs: (MGC2, MGW1) and (MGC2, MGW2).

2) The call establishment module is adapted to select, via the local office MGC, an office direction gateway pair which is allowed to establish a call from the office direction gateway pairs configured by the configuration module when a new call is established, and then issue a bearer establishment request to the local office MGW in the office direction gateway pair and request the peer office MGC to establish the call.

For example, when a user under local office MGC1 initiates a call to a user under peer office MGC2, MGC1 selects an office direction gateway pair (MGC2, MGW2) which is allowed to establish a call from two office direction gateway pairs preconfigured in the QoS information table according to the office direction directed to MGC2,, in other words, MGC1 selects MGW2 as outgoing; then, MGC1 issues a bearer establishment request to MGW2, and the bearer establishment request carries QoS sampling request information for requesting to sample the QoS of the call newly established; and MGC1 requests the peer office MGC2 to establish the call via a call control signaling (such as SIP and BICC).

3) The flow control module is adapted to determine, via the local office MGC. whether to perform the flow control on call amount of the selected office direction gateway pair according to the information reported by the local office MGW after the call establishment module establishes the call.

The call establishment module includes a selecting unit.

The selecting unit is adapted to select an office direction gateway pair of which the sum of newly added call amount and existing call amount does not reach or exceed a preset threshold, in other words, only an office direction gateway pair in which the sum of newly added call amount and existing call amount does not reach or exceed a preset threshold is allowed to establish a call.

The flow control module includes a traffic limitation unit and a traffic release unit.

1) The traffic limitation unit is adapted to start a flow control via the local office MGC and decrease the call amount of the selected office direction gateway pair gradually when the message reported by the local office MGW indicates that the QoS becomes poor.

For example, MGW2 determines the current QoS according to the delay, packet loss and jitter of the IP stream of the current call. If the current QoS becomes poor and cannot meet the call quality requirement, MGW2 deports the QoS message to MGC1. After MGC1 receives the information indicating that the QoS becomes poor reported by MGW2, MGC1 may starts the flow control on the selected office direction gateway pair (MGC2, MGW2) and limits the call amount of the office direction gateway pair, in other words, decreases the call amount gradually. In addition, when the flow control is started, an alarm may be reported to an alarm device for indicating that the office direction gateway pair is in the flow control state. After the flow control is started, a minimum value may be preset and when the call amount after the flow control reaches the minimum value, the flow control is stopped.

2) The traffic release unit is adapted to stop the flow control via the local office MGC and release the control on call amount of the selected office direction gateway pair gradually when the message reported by the local office MGW is a message indicating that the QoS is recovered.

For example, after the QoS of the IP stream of the call is recovered, MGW2 reports QoS recovery information to MGC1. After MGC1 receives the QoS recovery information reported by MGW2, MGC1 stops the flow control and releases the control on call amount of then selected office direction gateway pair (MGC2, MGW2) gradually. After the flow control is stopped, an alarm recovery message may be reported to the alarm device for indicating that the flow control is stopped on the office direction gateway pair.

The device for routing and flow control further includes a QoS information update module.

The QoS information update module is adapted to record a preconfigured office direction gateway pair in a QoS information table via the local office MGC and update the QoS information of the office direction gateway pair in the QoS information table after the QoS information reported by the local office MGW is received.

For example, after MGC1 receives the information indicating that the QoS becomes poor reported by MGW2, MGC1 updates the QoS information of the office direction gateway pair in which MGW2 exists in the QoS information table saved in MGC1. After MGC1 receives the QoS recovery information reported by MGW2, MGC1 searches a record of the office direction gateway pair pre-stored in the QoS information table and updates the QoS information of the office direction gateway pair in the record.

Referring to Figure 4 and Figure 7, an embodiment of the present invention further provides a system for routing and flow control including a local office MGC MGC1 and a peer office MGC MGC2.

The local office MGC MGC1 includes a configuration module, a call establishment module, and a flow control module.

1) The configuration module is adapted to pre-configure an office direction gateway pair according to the office direction to the peer office MGC.

For example, two office direction gateway pairs (MGC2, MGW1) and (MGC2, MGW2) in the office direction directed to MGC2 are configured.

2) The call establishment module is adapted to select an office direction gateway pair which is allowed to establish a call from the office direction gateway pairs configured by the configuration module when a new call is established, and then issue a bearer establishment request to the local office MGW in the office direction gateway pair and request the peer office MGC to establish the call.

For example, when a user under MGC1 initiates a call to a user under MGC2, MGC1 issues a bearer establishment request to MGW2 after selecting an office direction gateway pair (MGC2, MGW2) which is allowed to establish a call, carries QoS sampling request information in the request, and then requests the peer office MGC2 to establish the call via a call control signaling (such as SIP and BICC).

3) The flow control module is adapted to determine whether to perform a flow control on call amount of the office direction gateway pair according to the information reported by the local office MGW after the call establishment module establishes the call.

The peer office MGC2 includes a call establishment module.

The call establishment module is adapted to establish a call after receiving a call establishment request from the local office MGC.

The flow control module includes a traffic limitation unit and a traffic release unit.

1) The traffic limitation unit is adapted to start a flow control and decrease the call amount of the selected office direction gateway pair gradually when the message reported by the local office MGW is a message indicating that the QoS becomes poor.

For example, when the current QoS becomes poor. MGW2 reports the QoS message to MGC1. After MGC1 receives the QoS message, MGC1 starts the flow control on the selected office direction gateway pair (MGC2, MGW2), and limits the call amount of the office direction gateway pair, in other words, decreases the call amount gradually. In addition, when the flow control is started, an alarm may be reported to an alarm device for indicating that the office direction gateway pair is in the flow control state. After the flow control is started, a minimum value may be preset and after the call amount after the flow control reaches the minimum value, the flow control is stopped.

2) The traffic release unit is adapted to stop the flow control and release the control on call amount of the selected office direction gateway pair gradually when the message reported by the local office MGW is a message indicating that QoS is recovered.

For example, after the QoS is recovered, MGW2 reports QoS recovery information to MGC1. After MGC1 receives the Cos recovery information, MGC1 stops the flow control and releases the control on call amount of the selected office direction gateway pair (MGC2, MGW2) gradually. After the flow control is stopped, an alarm recovery message may be reported to the alarm device for indicating that the flow control is stopped on the direction gateway pair.

The local office MGC further includes a QoS information update module.

The QoS information update module is adapted to record a preconfigured office direction gateway pair in a QoS information table and update the QoS information of the corresponding office direction gateway pair in the QoS information table after the QoS information reported by the local office MGW is reported.

For example, MGC1 adds two records in the QoS information table in advance for recording two configured office direction gateway pairs: (MGC2, MGW1) and (MGC2, MGW2). After MGC1 receives the information indicating that the QoS becomes poor reported by MGW2, MGC1 updates the QoS information of the office direction gateway pair in which MGW2 exists in the QoS information table stored in MGC1. After MGC1 receives the QoS recovery information reported by MGW2, MGC1 searches a record of the office direction gateway pair stored in the QoS information table and updates the QoS information of the office direction gateway pair in the record.

In the method, device or system for the routing and flow control according to the embodiments, the mode in which the routing and flow control is based on an office direction gateway pair may be replaced with the mode in which the routing and flow control is based on an IP trunk group gateway pair as follows.

An IP trunk group gateway pair is preconfigured on the local office MGC. When the IP trunk group gateway pair mode is employed, the routing process is the same as that of the prior art, except that, the flow control is only performed on the IP trunk group associated with the MGW reporting a message indicating that the QoS becomes poor while no flow control is performed on IP trunk groups which are not associated with the MGW reporting a message indicating that the QoS becomes poor, according to preconfigured IP trunk group gateway pairs.

For example, it is assumed that two IP trunk group gateway pairs, (IP trunk group 1, MGW1) and (IP trunk group 1, MGW2), are provided, in other words, MGW1 and MGW2 are both associated with IP trunk group 1. If MGW1 reports the information indicating that the QoS becomes poor, the flow control is only performed on the IP trunk group associated with MGW1 in IP trunk group 1, while no flow control is performed on the IP trunk group associated with MGW2 in IP trunk group 1. In the prior art, the flow control is performed on all the IP trunk groups, Therefor, in comparison with the prior art, the precision of the flow control is improved, the flow control is further refined, and the QoS misjudgment is avoided.

In the embodiments of the present invention when QoS changes (being poor or recovered), an alarm may also be reported to an alarm device for indicating that the QoS of the office direction gateway pair or the IP trunk group gateway pair changes, In consideration that the QoS misjudgment may be caused because the QoS sampling is only performed on one call, the MGC may further sample the QoS of a plurality of calls at the same time. Correspondingly, all the QoS information sampled is recorded and stored in the QoS information table, so that the accuracy of QoS sampling is improved and the QoS misjudgment is avoided.

Additional advantages and modifications will readily occur to those skilled in the art. Therefore, the invention is not limited to the specific details and representative embodiments shown and described herein. Accordingly, various modifications and variations may be made without departing from the spirit or scope of the invention as defined by the appended claims and their equivalents.

## Claims

1. A method for routing and flow control, **characterised by** comprising:
selecting an office direction gateway pair which is allowed to establish a call from preconfigured office direction gateway pairs to establish a call, the preconfigured office direction gateway pairs comprising an office direction gateway pair preconfigured according to an office direction from a local office Media Gateway Controller, MGC, to a peer office MGC; and
after the call is established, determining whether to perform a flow control on a call amount of the office direction gateway pair according to reported Quality of Service, QoS, information of the office direction gateway pair.

2. The method for the routing and flow control according to claim 1, **characterised in that** the selecting the office direction gateway pair which is allowed to establish the call from the preconfigured office direction gateway pairs to establish the call comprises:
selecting the office direction gateway pair from the preconfigured office direction gateway pairs and establishing the call on the office direction gateway pair, when the office direction gateway pair selected meets a condition that a sum of newly added call amount and existing call amount does not reach or exceed a preset threshold.

3. The method for the routing and flow control according to claim 1, **characterised in that** the determining whether to perform the flow control on the call amount of the office direction gateway pair comprises:
if the reported QoS information is that QoS becomes poor, starting the flow control and decreasing the call amount of the office direction gateway pair; and if the reported QoS information is that QoS is recovered, stopping the flow control and increasing the call amount of the office direction gateway pair.

4. The method for the routing and flow control according to claim 1, **characterised in that** the determining whether to perform the flow control on the call amount of the office direction gateway pair according to the reported QoS information comprises:
determining whether to perform the flow control on the can amount of the office direction gateway pair according to reported QoS information of at least one call on the office direction gateway pair.

5. A device for routing and flow control, **characterised by** comprising:
a call establishment module, adapted to select an office direction gateway pair which is allowed to establish a call from configured office direction gateway pairs to establish a call; and
a flow control module, adapted to determine whether to perform a flow control on a call amount of the office direction gateway pair according to reported Quality of Service, QoS, information of the office direction gateway pair after the call establishment module establishes the call.

6. The device according to claim 5, **characterized by** further comprising a configuration module, adapted to configure the office direction gateway pair according to an office direction from a local office MGC to a peer office MGC,

7. The device for the routing and flow control according to claim 5, **characterised in that** the office direction gateway pair which is allowed to establish the call comprises:
an office direction gateway pair meeting a condition that a sum of newly added call amount and existing call amount does not reach or exceed a preset threshold.

8. The device for the routing and flow control according to claim 5, **characterised in that** the flow control module comprises:
a traffic limitation unit, adapted to start the flow control and decrease the call amount of the office direction gateway pair when the reported QoS information is that QoS becomes poor; and
a traffic release unit, adapted to stop the flow control and increase the call amount of the office direction gateway pair when the reported QoS information is that QoS is recovered.

9. The device for the routing and flow control according to claim 5, wherein the reported QoS information of the office direction gateway pair comprises QoS information of at least one call on the office direction gateway pair.

10. A system for routing and flow control, **characterised by** comprising: a local office Media Gateway Controller, MGC, and a peer office MGC, wherein
the local office MGC is adapted to select an office direction gateway pair which is allowed to establish a call from preconfigured office direction gateway pairs to establish a call, and determine whether to perform a flow control on a call amount of the office direction gateway pair according to reported Quality of Service, QoS, information after the call is established; and
the peer office MGC is adapted to establish the call after receiving a call establishment request from the local office MGC.

11. A method for routing and flow control, **characterised by** comprising:
selecting an IP trunk group gateway pair from preconfigured IP trunk group gateway pairs to establish a call, the IP trunk group gateway pair comprising an IP trunk group gateway pair preconfigured according to an office direction from a local office Media Gateway Controller, MGC, to a peer office MGC; and
determining whether to perform a flow control on a call amount of an IP trunk group in the IP trunk group gateway pair according to reported Quality of Service, QoS, and information of the office direction gateway pair after the call is established.

12. A device for routing and flow control, **characterised by** comprising:
a call establishment module, adapted to select an IP trunk group gateway pair from configured IP trunk group gateway pairs to establish a call; and
a flow control module, adapted to determine whether to perform a flow control on a call amount of an IP trunk group in the IP trunk group gateway pair according to reported Quality of Service, QoS, information after the call establishment module establishes the call.

13. The device according to claim 12, **characterised by** further comprising a configuration module, adapted to configure the IP trunk group gateway pair according to an office direction from a local office Media Gateway, MGW, controller to a peer office MGC.

14. A system for routing and flow control, **characterised by** comprising a local office Media Gateway Controlled, MGC, and a peer office MGC, wherein
the local office MGC is adapted to select an IP trunk group gateway pair from configured IP trunk group gateway pairs to establish a call, and determine whether to perform a flow control on a call amount of an IP trunk group in the IP trunk group gateway pair according to reported Quality of Service, QoS, information of the office direction gateway pair after the call establishment module establishes the call; and
the peer office MGC is adapted to establish the call after receiving a call establishment request from the local office MGC.
